# EUROPEAN PATENT APPLICATION

(11) **EP 2 747 169 A2**
(43) Date of publication of application: **25.06.2014**
(21) Application number: 12824253.4
(22) Date of filing: 17.08.2012
(51) Int. Cl.: H01M 2/10, H01M 2/30

(54) **METHOD FOR MANUFACTURING A SECONDARY BATTERY**

(30) Priority: 18.08.2011 KR 20110082305
(71) Applicant: LG Chem, Ltd., Seoul 150-721 (KR)
(72) Inventor: KIM, Sung-Jong, Daejeon 305-380 (KR); KU, Cha-Hun, Daejeon 305-380, (KR)
(74) Representative: Cabinet Plasseraud
(86) International application number: PCT/KR2012/006562
(87) International publication number: WO 2013/025078

(57) **Abstract**

Disclosed is a method for manufacturing a secondary battery, which may increase a capacity of the secondary battery and effectively prevent movement of an electrode assembly. The method manufactures a secondary battery having no beading portion at a battery can and includes preparing a battery can having an outer protrusion protruding outwards on the outer circumference thereof, inserting an electrode assembly into the battery can, and applying a pressure to the outer protrusion of the battery can toward the inside of the battery can so that an inner protrusion is formed on the inner circumference of the battery can.

## Description

### TECHNICAL FIELD

The present application claims priority to Korean Patent Application No. 10-2011-0082305 filed in the Republic of Korea on August 18, 2011, the disclosures of which are incorporated herein by reference.

The present disclosure relates to a technique for manufacturing a secondary battery, and more particularly, to a method for manufacturing a secondary battery, which may increase a capacity of the secondary battery and effectively prevent movement of an electrode assembly.

### BACKGROUND ART

Generally, a secondary battery refers to a rechargeable battery, while a general battery refers to a non-rechargeable battery. Secondary batteries are widely used for electronic devices such as cellular phones, notebook computers, video cameras, electric vehicles or the like. In particular, a lithium secondary battery has an operating voltage of about 3.6 V, triple the capacity of nickel-cadmium batteries or nickel hydrogen batteries generally used as power sources of electronic devices, and due to its high energy density per unit weight, are being utilized more and more.

The lithium secondary battery generally uses lithium oxide and carbonaceous material as cathode active material and anode active material, respectively. The lithium secondary battery includes an electrode assembly in which a cathode plate and an anode plate respectively coated with the cathode active material and the anode active material are disposed with a separator being interposed between them, and an exterior material which seals and accommodates the electrode assembly together with an electrolyte.

Meanwhile, the lithium secondary battery may be classified into a can type secondary battery where the electrode assembly is included in a metal can and a pouch type battery where the electrode assembly is included in a pouch of an aluminum laminate depending on the shape of the battery case. In addition, the can type secondary battery may further be classified into a cylindrical battery and a rectangular battery depending on the shape of the metal can.

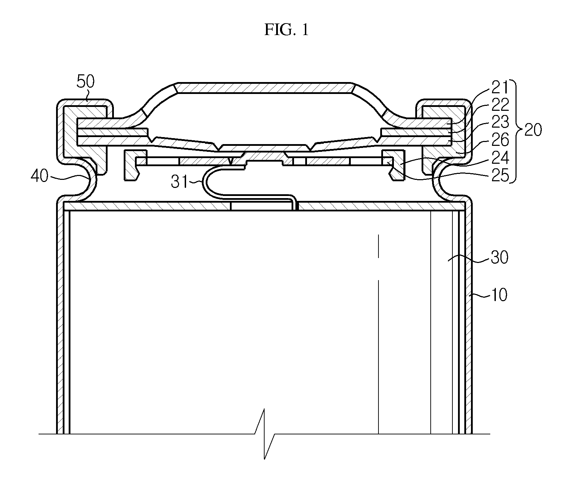

Fig. 1 is a cross-sectional view schematically showing a configuration of a conventional cylindrical secondary battery.

Referring to Fig. 1, a cylindrical secondary battery generally includes a cylindrical battery can 10, a jelly-roll type electrode assembly 30 accommodated in the battery can 10, a cap assembly 20 coupled to the upper portion of the battery can 10, a beading portion 40 provided at the front end of the battery can 10 to mount the cap assembly 20 thereto, and a clamping portion 50 for sealing the battery.

The electrode assembly 30 has a rolled structure in a jelly-roll type with a separator being interposed between a cathode and an anode. A cathode lead 31 is attached to the cathode and connected to the cap assembly 20, and an anode lead (not shown) is attached to the anode and connected to the lower end of the battery can 10.

The cap assembly 20 includes a top cap 21 forming a cathode terminal, a safety element 22 such as a positive temperature coefficient (PTC) element for interrupting current by increasing resistance when an internal temperature of a battery raises, a safety vent 23 for interrupting current when an inner pressure of the battery increases and/or exhausting gas, an insulating member 24 for electrically isolating the safety vent 23 from a current interrupting member 25 except for special regions, and a current interrupting member 25 accessed by a cathode lead 31 connected to the cathode, which are stacked in order. In addition, the cap assembly 20 is mounted to a beading portion 40 of the battery can 10 in a state of being mounted to a gasket 26. Therefore, under a normal operation condition, the cathode of the electrode assembly 30 is electrically connected to the top cap 21 via the cathode lead 31, the current interrupting member 25, the safety vent 23 and the safety element 22.

The secondary battery configured as above generally includes a process of inserting the electrode assembly into a battery can and a process of forming a beading portion at the front end of the battery can.

However, in the conventional secondary battery manufacturing method as described above, since the beading portion is formed, a space for accommodating the electrode assembly is reduced as much as the area of the beading portion. Therefore, the presence of the beading portion may be an obstacle to increasing a capacity of the secondary battery.

Nevertheless, when a conventional secondary battery is manufactured, the beading portion is formed because a cap assembly is not easily placed on and coupled to the open end of the battery can and the cap assembly may not be stably coupled unless the beading portion is formed. Moreover, since the conventional beading portion plays a role of restraining vertical movement of the electrode assembly inside the battery can, if the beading portion is not present, the electrode assembly may move more inside the battery can. In addition, the vertical movement of the electrode assembly may cut the electrode lead connected between the electrode assembly and the cap assembly, which may cause a power-insensitive phenomenon to the secondary battery. In addition, the vertical movement may compress an upper or lower portion of the electrode assembly, which may damage or deform the electrode assembly. Therefore, the movement of the electrode assembly may lead to an accident such as firing or explosion as well as malfunction or breakdown of the secondary battery, which may result in a great damage. In addition, since the vertical movement of the electrode assembly applies impact to the cap assembly coupled to the upper end portion of the secondary battery, the sealed portion may damage or separate, which can lead to the electrolyte in the secondary battery to leak out.

### DISCLOSURE

### Technical Problem

The present disclosure is designed to solve the problems of the prior art, and therefore the present disclosure is directed to providing a method for manufacturing a secondary battery, which may increase a capacity of the secondary battery and effectively prevent movement of an electrode assembly.

Other objects and advantages of the present disclosure will be understood from the following description and become more apparent by embodiments of the present disclosure. In addition, it could be easily understood that the objects and advantages of the present disclosure can be implemented by means and their combinations defined in the claims.

### Technical Solution

In one aspect of the present disclosure, there is provided a method for manufacturing a secondary battery having no beading portion at a battery can, which includes preparing a battery can having an outer protrusion protruding outwards on the outer circumference thereof; inserting an electrode assembly into the battery can; and applying a pressure to the outer protrusion of the battery can toward the inside of the battery can so that an inner protrusion is formed on the inner circumference of the battery can.

Preferably, the battery can is prepared by a drawing process.

Also preferably, the inner protrusion is formed on the inner circumference of the battery can by means of a forging process.

In another aspect of the present invention, there is also provided a secondary battery manufactured by the above method.

### Advantageous Effects

According to the present disclosure, it is possible to improve a capacity of a secondary battery by manufacturing the secondary battery without forming a beading portion at a battery can and thereby increasing a space for accommodating an electrode assembly inside the battery can.

Moreover, it is possible to effectively prevent the electrode assembly from moving inside the secondary battery without forming a beading portion at the battery can. Therefore, it is possible to prevent an electrode lead connected to the cap assembly from being cut due to the movement of the electrode assembly and thus causing a power-insensitive phenomenon.

In addition, according to the present disclosure, since an impact applied to the cap assembly due to the vertical movement of the electrode assembly is prevented, the coupling portion between the cap assembly and the battery can is not damaged. Therefore, electrolyte leakage caused by the damage of the coupling portion of the cap assembly may also be prevented.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings in which:
Fig. 1 is a cross-sectional view schematically showing a conventional cylindrical secondary battery;
Fig. 2 is a schematic flowchart for illustrating a method for manufacturing a secondary battery according to an embodiment of the present disclosure;
Fig. 3 is a cross-sectional view schematically showing an embodiment of a battery can prepared in Step S110 of Fig. 2;
Fig. 4 is a cross-sectional view for illustrating a process of applying a pressure to an outer protrusion of the battery can according to an embodiment of the present disclosure;
Fig. 5 is a cross-sectional view schematically showing an inner protrusion formed on the inner circumference of the battery can as a result of the process of Fig. 4; and
Fig. 6 is a cross-sectional view for illustrating a process of welding the electrode assembly mounted to the open end of the battery can to the battery can according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the spirit and scope of the disclosure.

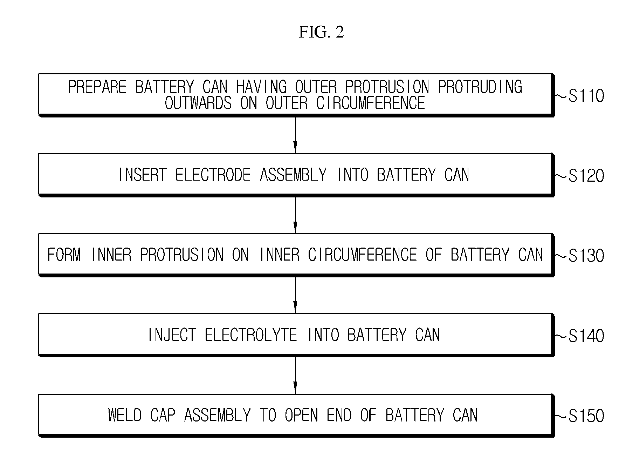

Fig. 2 is a schematic flowchart for illustrating a method for manufacturing a secondary battery according to an embodiment of the present disclosure.

As shown in Fig. 2, in order to manufacture a secondary battery according to the present disclosure, first, a battery can having an outer protrusion protruding outwards on the outer circumference is prepared (S110). The battery can of the secondary battery accommodates an electrode assembly and an electrolyte therein and is made of lightweight conductive material such as aluminum, stainless steel or their alloys.

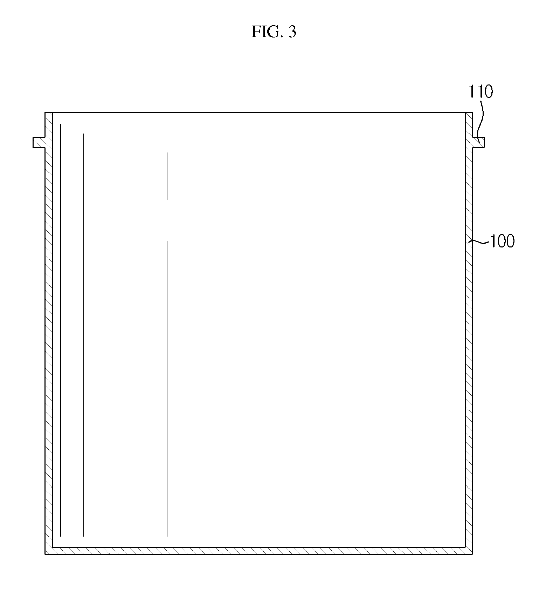

Fig. 3 is a cross-sectional view schematically showing an embodiment of a battery can 100 prepared in Step S110 of Fig. 2.

Referring to Fig. 3, the battery can 100 for a secondary battery according to the present disclosure may have a cylindrical or rectangular structure with an open portion having an open top and a sealed bottom portion opposite thereto.

In particular, the battery can 100 prepared in Step S110 according to the present disclosure includes an outer protrusion 110 protruding outwards in the horizontal direction at a predetermined position of the outer circumference. Here, the outer protrusion 110 is located at an upper portion of the outer circumference of the battery can 100 where the open end is present, as shown in Fig. 3. However, the present disclosure is not limited to a specific location, size, shape or the like of the outer protrusion 110.

The battery can 100 as shown in Fig. 3 may be manufactured by a drawing process using a die. The drawing process is well known to those skilled in the art and thus not described in detail here. In addition to the drawing process, Step S110 for preparing the battery can 100 may also be performed by various techniques known in the art at the filing of the present disclosure.

If the battery can 100 having the outer protrusion 110 on the outer circumference is prepared, an electrode assembly is inserted into the battery can 100 (S120).

The electrode assembly includes a cathode plate and an anode plate, which are disposed with a separator being interposed between them. Since the electrode assembly is generally rolled in a jelly-roll type, it is also called a jelly roll. Each electrode plate of the electrode assembly includes a current collector coated with active material slurry. In general cases, the slurry may be formed by stirring granular active material, an auxiliary conductor, a binder, a plasticizer or the like, which are added to a solvent. In addition, at an initiating end and a terminating end of the current collector based on the rolling direction of the electrode, non-coating portions not coated with slurry may be present.

If the electrode assembly is inserted into the battery can 100 as described above, a pressure is applied to the outer protrusion 110 of the battery can 100 toward the inside of the battery can 100, thereby forming an inner protrusion on the inner circumference of the battery can 100 (S130).

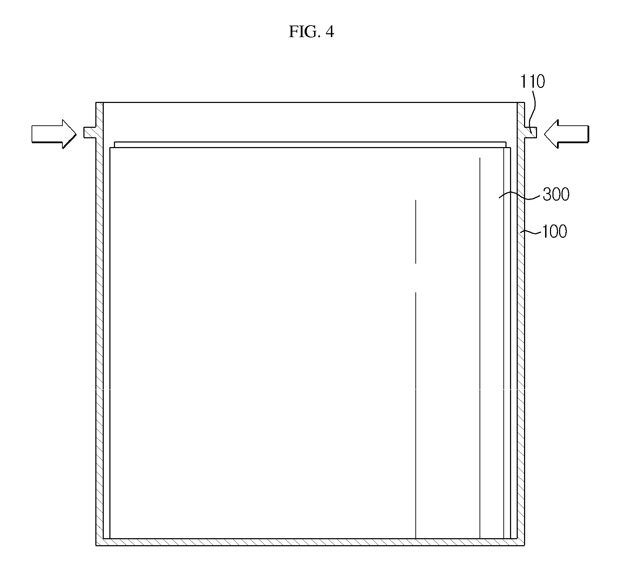

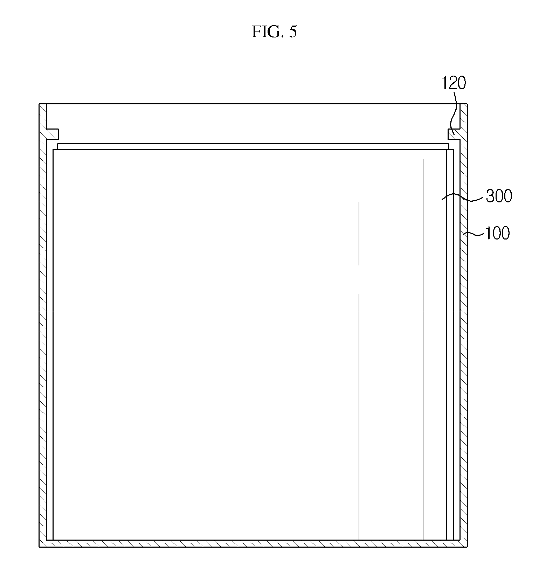

Fig. 4 is a cross-sectional view for illustrating a process of applying a pressure to the outer protrusion 110 of the battery can 100 according to an embodiment of the present disclosure, and Fig. 5 is a cross-sectional view schematically showing the inner protrusion 120 formed on the inner circumference of the battery can 100 as a result of the process of Fig. 4.

Referring to Fig. 4, in S130, a pressure is applied to the outer protrusion 110 of the battery can 100 into which the electrode assembly 300 has been inserted from the outside of the battery can 100 to the inside, as shown by arrows.

Then, as shown in Fig. 5, the outer protrusion 110 provided on the outer circumference of the battery can 100 is pushed toward the inside of the battery can 100, and the inner protrusion 120 may be formed on the inner circumference of the battery can 100.

Here, Step S130 where a pressure is applied to the outer protrusion 110 of the battery can 100 as shown in Fig. 4 to form the inner protrusion 120 of the battery can 100 as shown in Fig. 5 may be performed by means of a forging process. The forging process is well known to those skilled in the art and thus not described in detail here. In addition, Step S130 may be performed by various techniques known in the art at the filing of the present disclosure in addition to the forging process.

In case of manufacturing a secondary battery according to the present disclosure, a beading portion is not formed at the battery can 100. However, since the inner protrusion 120 is formed on the inner circumference of the battery can 100 as described above, the movement of the electrode assembly 300 may be restrained inside the battery can 100. Therefore, even though the receiving space of the electrode assembly 300 is increased to improve the capacity of the secondary battery, problems such as a power-insensitive phenomenon or a damage of the cap assembly or other sealed portions, caused by the movement of the electrode assembly 300, may be effectively solved.

In addition, according to the present disclosure, since the inner protrusion 120 is formed on the inner circumference of the battery can 100 after the electrode assembly 300 is inserted, the electrode assembly 300 may not have a small size due to the inner protrusion 120 of the battery can 100. In other words, if the inner protrusion 120 is formed on the inner circumference of the battery can 100 and then the electrode assembly 300 is inserted, different from the present disclosure, the size of the electrode assembly 300 should be smaller than the space inside the inner protrusion 120. If not, due to the inner protrusion 120, the electrode assembly 300 may not be easily inserted into the battery can 100. However, according to the present disclosure, since the inner protrusion 120 is formed on the battery can 100 after the electrode assembly 300 is inserted, the electrode assembly 300 may have a maximum size allowed by the inside of the battery can 100 regardless of the inner protrusion 120. Therefore, if the secondary battery is manufactured according to the present disclosure, the capacity of the secondary battery may be enhanced.

Meanwhile, as shown in Fig. 2, the method for manufacturing a secondary battery according to the present disclosure may further include injecting an electrolyte into the battery can 100 (S140). The electrolyte injecting step S140 may be performed after Step S130 where the inner protrusion 120 is formed on the inner circumference of the battery can 100 as shown in Fig. 2. However, Step 140 may also be performed before S130

In addition, as shown in Fig. 2, the method for manufacturing a secondary battery according to an embodiment of the present disclosure may further include mounting a cap assembly to an open end of the battery can 100 and welding the cap assembly mounted as described above to the battery can 100 by laser (S150).

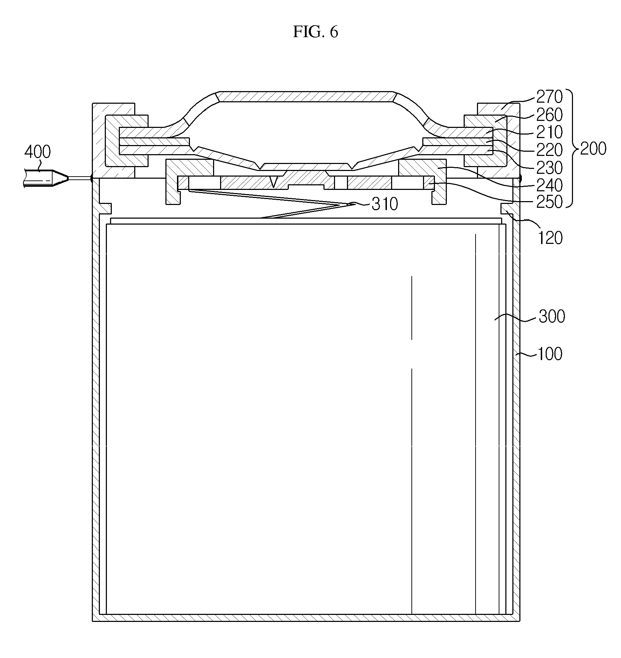

Fig. 6 is a cross-sectional view for illustrating a process of welding the electrode assembly 300 mounted to the open end of the battery can 100 to the battery can 100 according to an embodiment of the present disclosure.

The cap assembly 100 is coupled to the open end of the battery can 100 to seal the secondary battery and plays a role of a terminal for outputting power of the secondary battery. The cap assembly 100 may include various components for electric connection and safety of the secondary battery.

Referring to Fig. 6, the cap assembly 200 may include a top cap 210, a safety element 220, a safety vent 230, a gasket 260 and a cover 270.

The top cap 210 is disposed to protrude upwards on the top portion of the cap assembly 200 to form a cathode terminal. Therefore, the top cap 210 is electrically connected to the outside. The safety element 220 is interposed between the top cap 210 and the safety vent 230 to electrically connect the top cap 210 and the safety vent 230. The safety element 220 is used for interrupting the flow of current due to overheating of the battery and may be made of, for example, a positive temperature coefficient (PTC element. The safety vent 230 is disposed to contact the safety element 220 at a location below the safety element 220 and is configured to rupture when the inner voltage of the secondary battery increases over a certain level. The gasket 260 surrounds rim portions of the top cap 210, the safety element 220 and the safety vent 230 and may be made of material with electric insulation, impact resistance, elasticity and durability, for example polyolefin or polypropylene (PP). The cover 270 surrounds the gasket 260 so that the top cap 210, the safety element 220 and the safety vent 230 are closely adhered, and is welded to the open end of the battery can 100. Therefore, the cover 270 may be made of nickel, aluminum, nickel alloys, aluminum alloys or the like for such welding.

In addition, the cap assembly 200 may further include a current interrupting member 250 accessed by an electrode lead 310 connected to the electrode assembly 300, and an insulating member 240 for electrically isolating the safety vent 230 from the current interrupting member 250 except for special regions.

However, the present disclosure is not limited to the detailed configuration of the cap assembly 200 as described above.

The cap assembly 200 described above is placed on the open end of the battery can 100 and welded to the battery can 100 by laser by using a laser welding device 400 as shown in Fig. 6. In particular, since the present disclosure is directed to a method for manufacturing a secondary battery without a beading portion at the battery can 100, it is preferred to weld the cap assembly 200 and the battery can 100 by laser. In case of a conventional secondary battery, the cap assembly 200 and the battery can 100 may be coupled and sealed due to the presence of a beading portion and a clamping portion. However, in case of the present disclosure, since such a beading portion and a clamping portion are not formed, the cap assembly 200 and the battery can 100 may be coupled and sealed by laser welding.

Meanwhile, even though Fig. 6 illustrates that the cap assembly 200 is placed on the top of the battery can 100, it is just an example, and the cap assembly 200 may also be placed inside the open end of the battery can 100. At this time, the cap assembly 200 may be placed on the inner protrusion 120 formed on the inner circumference of the battery can 100 or a step separately prepared on the inner circumference.

In addition, the method for manufacturing a secondary battery according to the present disclosure may further include other processes in addition to the processes shown in Fig. 2. For example, before the cap assembly 200 is welded to the battery can 100, a process of connecting the electrode lead 310 and the cap assembly 200 by laser welding may be further included.

The secondary battery of the present disclosure is manufactured according to the manufacturing method as described above. For example, the secondary battery according to the present disclosure may be manufactured by preparing a battery can 100 having an outer protrusion 110 on the outer circumference thereof, inserting an electrode assembly 300 into the battery can 100, and applying a pressure to the outer protrusion 110 of the battery can 100 toward the inside of the battery can 100 so that an inner protrusion 120 is formed on the inner circumference of the battery can 100.

The present disclosure has been described in detail. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

## Claims

1. A method for manufacturing a secondary battery having no beading portion at a battery can, the method comprising:
preparing a battery can having an outer protrusion protruding outwards on the outer circumference thereof;
inserting an electrode assembly into the battery can; and
applying a pressure to the outer protrusion of the battery can toward the inside of the battery can so that an inner protrusion is formed on the inner circumference of the battery can.

2. The method for manufacturing a secondary battery according to claim 1, wherein the battery can is prepared by a drawing process.

3. The method for manufacturing a secondary battery according to claim 1, wherein the inner protrusion is formed on the inner circumference of the battery can by means of a forging process.

4. The method for manufacturing a secondary battery according to claim 1, wherein the battery can is cylindrical.

5. The method for manufacturing a secondary battery according to claim 1, wherein a cap assembly is mounted to an open end of the battery can, and wherein the method further comprises welding the cap assembly and the battery can by laser.

6. A secondary battery manufactured by the method for manufacturing a secondary battery defined in any one of claims 1 to 5.
